# DEMANDE DE BREVET EUROPEEN

(11) **EP 2 116 412 A2**
(43) Date de publication de la demande: **11.11.2009**
(21) Numéro de dépôt: 09305398.1
(22) Date de dépôt: 05.05.2009
(51) Int. Cl.: B60L 15/32, B60L 11/18, B60K 1/02

(54) **Dispositif de propulsion ou de traction électrique d'un véhicule**

(30) Priorité: 05.05.2008 FR 0852974
(71) Demandeur: Renault s.a.s., 92100 Boulogne-Billancourt (FR)
(72) Inventeur: Balmy, Richard, 92800 Puteaux (FR); Hennequet, Gonzalo, 92500 Rueil Malmaison (FR)

(57) **Abrégé**

L'invention vise un dispositif de propulsion ou de traction d'un véhicule, le dispositif comprenant un premier moteur électrique (1) ayant une zone de fonctionnement optimisée se situant à bas régime, un second moteur électrique (2) ayant une zone de fonctionnement optimisées se situant à haut régime, **caractérisé en ce que** le dispositif comprend en outre un moyen de couplage (20) destinée à coupler et à découpler des roues (22, 24) du véhicule indépendamment au premier moteur électrique (1) et au second moteur électrique (2).

## Description

L'invention concerne les groupes motopropulseurs.

L'invention concerne plus particulièrement un dispositif de propulsion ou de traction à l'aide de deux moteurs électriques.

Les actuelles préoccupations environnementales ainsi que les législations et en particulier européennes s'apprêtent à renforcer les pénalités liées aux émissions de CO₂ des véhicules.

Dans ce cadre, un système bi-moteur électrique est une des solutions techniques permettant une réduction importante de la consommation et des émissions de CO₂.

Dans l'état de l'art, il est connu d'équiper un véhicule électrique d'un dispositif de propulsion ou de traction comprenant deux moteurs électriques.

Par exemple, le document US 6 364 806 B1 décrit un dispositif de propulsion ou de traction d'un véhicule comprenant deux moteurs électriques, les moteurs électriques étant de même puissance, et un dispositif de contrôle et de distribution des charges entre les deux moteurs afin de garantir un rendement maximum des moteurs.

Le document CA 2 346 624 A1 décrit, quant à lui, un système de propulsion ou de traction d'un véhicule comprenant deux moteurs sensiblement de même puissance, montés en parallèle, les moteurs étant couplés à un même dispositif de transmission de puissance, ce dispositif étant couplé aux roues motrices du véhicule.

Les véhicules équipés d'un système de double moteur électrique tel que présenté précédemment ont l'avantage, par rapport à des véhicules équipés d'un seul moteur de traction, par exemple, de pouvoir fournir une puissance plus importante à l'aide de moteurs sous-dimensionnés réduisant ainsi le coût du dispositif (et donc du véhicule).

La nécessité de répondre aux exigences des usagers des véhicules en termes de performances oblige les constructeurs à équiper leurs véhicules de motorisation puissante.

Cependant, selon la technologie, la consommation d'un moteur électrique est optimisée dans une zone de fonctionnement précise (fort couple, haute puissance ou régime élevé).

Or, une motorisation électrique importante est généralement surdimensionnée par rapport aux besoins réels d'une voiture notamment lors de son utilisation en milieu urbain et extra urbain aux vitesses réglementaires limitées qui représentent une très grosse partie des déplacements des usagers.

Cela signifie qu'il y aura une surconsommation électrique selon l'utilisation du véhicule et la technologie de machines électriques choisie.

Afin de résoudre ce problème, les constructeurs ont mis au point des dispositifs de traction ou de propulsion d'un véhicule comprenant deux moteurs électriques, chacun des moteurs étant destiné à fonctionner dans une zone de fonctionnement optimale différente.

Ainsi, le document US 5 289 890 décrit un système de propulsion comprenant deux moteurs, le premier moteur étant destiné à fonctionner dans une zone de fonctionnement à haut régime, le second moteur étant destiné à fonctionner dans une zone de fonctionnement à bas régime.

Le dispositif comprend également une unité centrale de contrôle des moteurs destinée à commander les deux moteurs en fonction de la charge demandée par le conducteur, tout en garantissant un rendement maximum de l'utilisation du dispositif.

Le document GB 2 175 656 A présente, quant à lui, un dispositif de propulsion ou de traction d'un véhicule comprenant un premier moteur destiné à fonctionner dans une zone de fonctionnement à bas régime, et un deuxième moteur électrique tel que le fonctionnement simultané des deux moteurs place le dispositif dans une zone de fonctionnement à haut régime.

Les deux moteurs sont reliés à un moyen de transmission aux roues du véhicule.

Plus précisément, le procédé de commande du dispositif est tel que, dans une première étape dans laquelle le véhicule est à bas régime, le premier moteur est le seul à fonctionner, transmettant l'énergie mécanique aux roues du véhicule.

Dans une seconde étape dans laquelle la charge demandée par le conducteur dépasse un certain seuil, le second moteur est également mis en route afin que l'énergie mécanique produite par les deux moteurs permette de propulser le véhicule à haut régime, tout en garantissant un bon rendement du dispositif.

Le document FR 2 866 279 décrit, quant à lui, un système d'entraînement des roues motrices d'un véhicule automobile, le système comprenant un premier moteur électrique étant de puissance suffisante pour assurer un déplacement du véhicule dans des conditions de roulage dites « standard », un deuxième moteur, la puissance du deuxième moteur étant supérieure à celle du premier moteur, un dispositif de transmission d'énergie entre les roues motrices et le premier moteur, et des moyens d'embrayage du deuxième moteur sur ledit dispositif de transmission de sorte à transmettre l'énergie mécanique entre les roues et le deuxième moteur.

Plus précisément, le procédé de pilotage des moteurs du dispositif décrit par ce document est tel que le premier moteur est actif en permanence au cours du roulage et est utilisé à la même puissance quel que soit le mode de fonctionnement du véhicule, et le deuxième moteur n'est embrayé que lorsque la puissance demandée dépasse une puissance seuil.

Selon l'ensemble de ces solutions, les deux moteurs sont en permanence connectés aux roues motrices.

Les dispositifs d'entrainement électrique d'un véhicule et les procédés associés ont pour inconvénient que le premier moteur (généralement celui conçu pour fonctionner dans une zone à bas régime) fonctionne en permanence, ce qui a pour désavantage une usure plus rapide du moteur, mais également une utilisation de ce dernier en dehors de la zone de fonctionnement optimisé.

Un but de l'invention est de fournir un dispositif de traction ou de propulsion électrique présentant une amélioration par rapport à l'état de l'art.

A cet effet, l'invention propose un dispositif de propulsion ou de traction électrique d'un véhicule, le dispositif comprenant un premier moteur électrique ayant une zone de fonctionnement optimisé se situant à bas régime, un second moteur électrique ayant une zone de fonctionnement optimisé se situant à haut régime, **caractérisé en ce que** le dispositif comprend en outre un moyen de couplage destiné à coupler et à découpler des roues motrices du véhicule, indépendamment au premier moteur électrique et au second moteur électrique.

Avec un tel dispositif, le premier moteur n'est pas en utilisation permanente limitant ainsi son usure et son utilisation hors de sa zone de fonctionnement optimisé.

Un autre avantage de la présente invention est de garantir une continuité de service du véhicule : même si l'un des deux moteurs ne fonctionne plus, l'autre moteur peut continuer à garantir la traction ou la propulsion du véhicule. Bien évidemment, il s'agit alors d'un fonctionnement en mode dégradé temporaire (le temps de se rendre dans un garage et un centre de réparation de véhicule) ; en effet, le moteur qui n'est pas défaillant, peut être contraint de fonctionner hors de sa zone de fonctionnement optimal. De plus le système de couplage permet ici de déconnecter physiquement le moteur qui ne fonctionnement pas de la chaîne de transmission, évitant ainsi au moteur d'apporter son couple résistif (frottement, inertie, fonctionnement en « générateur », ...) à la chaîne de transmission.

Un autre avantage de la présente invention est de faciliter la maintenance du dispositif. En effet, si un moteur doit être changé, il peut être déconnecté physiquement de la chaîne de transmission simplement en actionnant le moyen de couplage à cet effet.

Un autre avantage encore se situe dans la récupération d'énergie en décélération. En effet, à haute vitesse, le deuxième moteur a un meilleur rendement de récupération que le premier.

Avantageusement, mais facultativement l'invention comprend au moins l'une des caractéristiques suivantes :
- le moyen de couplage comprend deux éléments d'embrayage associés respectivement au premier moteur électrique et au second moteur électrique,
- chaque élément d'embrayage est commandé par un actionneur,
- les éléments d'embrayage sont des crabots,
- le moyen de couplage comprend un moyen d'entraînement couplé à l'entrée d'un différentiel associé aux roues motrices,
- le dispositif comprend une unité centrale destinée à commander le moyen de couplage,
- l'unité centrale est destinée à commander les deux moteurs électriques,
- le dispositif comprend un moyen de réduction agencé entre un des deux moteurs électriques et le moyen de couplage,
- le moyen de couplage comprend une roue dont l'axe de rotation est relié à un premier embrayage correspondant au premier moteur et à un deuxième embrayage correspondant au second moteur, la roue du couplage entraînant l'entrée d'un différentiel correspondant aux roues motrices du véhicule,
- le moyen de couplage permet les quatre configurations suivantes :
   o les deux moteurs sont couplés aux roues,
   o seul le premier moteur est couplé aux roues,
   o seul le deuxième moteur est couplé aux roues,
   o les deux moteurs sont découpés des roues.

L'invention concerne également un véhicule comprenant des roues motrices, le véhicule comprenant également un dispositif de propulsion ou de traction électrique selon l'invention.

L'invention concerne enfin un procédé de commande d'un dispositif selon l'invention, comprenant les étapes suivantes :
- départ d'un état initial, avec une configuration initiale du dispositif,
- détecter des changements de commandes,
- déterminer si la configuration initiale est apte à répondre aux changements de commandes,
- selon le résultat de l'étape précédente, changer la configuration du dispositif,
- déterminer la commande du ou des moteurs avec la nouvelle configuration du dispositif,

D'autres caractéristiques, buts et avantages de la présente invention apparaîtront à la lecture de la description détaillée qui va suivre, au regard des dessins annexés, donnés à titre d'exemples non limitatifs et sur lesquels:
- la figure 1a, 1b et 1c sont des graphes présentant des points de fonctionnement d'un moteur électrique, ainsi que des zones de fonctionnement optimal associées à chacun des moteurs du dispositif selon l'invention,
- la figure 2 est une réalisation possible d'un dispositif selon l'invention,
- la figure 3 est une autre réalisation possible d'un dispositif selon l'invention,
- la figure 4 est une autre réalisation possible d'un dispositif selon l'invention,
- les figures 5a, 5b et 5c sont des représentations schématiques d'une réalisation possible d'un procédé selon l'invention.

L'invention concerne donc un dispositif de propulsion ou de traction électrique d'un véhicule, le dispositif comprenant un premier moteur électrique ayant une zone de fonctionnement optimisé se situant à bas régime, un second moteur électrique ayant une zone de fonctionnement optimisé se situant à haut régime, le dispositif comprenant en outre un moyen de couplage destiné à coupler et à découpler des roues motrices du véhicule, indépendamment au premier moteur électrique et au second moteur électrique.

Dans la suite de la description, nous appellerons « zone de fonctionnement optimisé », un ensemble de valeurs associées à des paramètres de fonctionnement du moteur (régime moteur, couple moteur, ...) pour lesquelles le moteur offre un rendement optimal.

Le dispositif peut être adapté indifféremment à l'essieu avant ou arrière, et permettre ainsi d'avoir un véhicule à traction ou à propulsion électrique.

Dans la suite de la description, et de manière générale, on utilise le terme de « dispositif d'entraînement des roues motrices d'un véhicule » afin de parler d'un « dispositif de propulsion ou de traction d'un véhicule ».

Comme décrit précédemment, un véhicule selon l'invention comprend deux moteurs. Dans la suite de la description, on entendra par « premier moteur », le moteur destiné à fonctionner à faible régime et par « second moteur », le moteur destiné à fonctionner à haut régime.

D'une façon générale, on peut différencier quatre modes de fonctionnement d'un véhicule, selon son régime :
- un mode « embouteillages », dont la vitesse moyenne est de 8 km/h et la vitesse maximum de 32 km/h ;
- un mode « urbain », dont la vitesse moyenne est de 18 km/h et la vitesse maximum de 57 km/h ;
- un mode « route », dont la vitesse moyenne est de 61 km/h et la vitesse maximum de 111 km/h ; et
- un mode « autoroute », dont la vitesse moyenne est de 119 km/h et la vitesse maximum de 150 km/h.

Ces valeurs numériques sont données à titre d'exemple afin d'illustrer les différends modes de fonctionnement et ne constituent pas une limitation de la description.

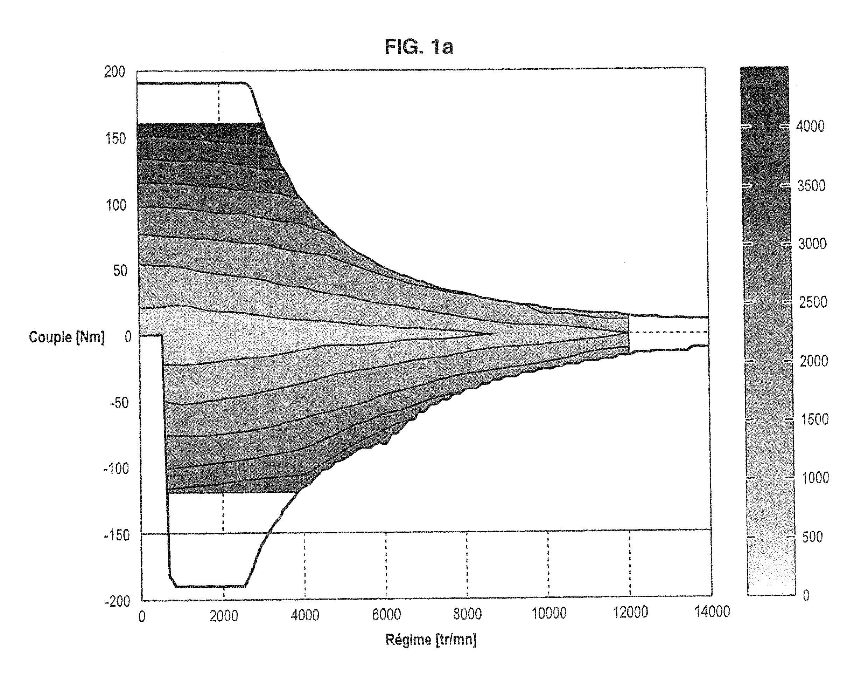

La figure 1a est un graphe de points de fonctionnement d'un moteur électrique. Le graphe comprend, en ordonnée, le couple délivré par le moteur (Nm) en fonction du régime du moteur (Tr/min). Les différents points de fonctionnement étant caractérisés par un dégradé de gris représentant les pertes du moteur (en watt). Ainsi, les dégradés les plus sombres présentent les moindres pertes et donc les meilleurs rendements. On peut visualiser sur ce graphe que plus le régime est élevé, plus le couple que le moteur peut offrir, à un rendement donné, est faible, ce qui est caractérisé par l'aspect décroissant des zones de fonctionnement. L'optimum serait évidemment d'avoir un moteur présentant les meilleurs rendements tant en basse vitesse qu'en haute vitesse. Bien évidemment, un tel moteur est difficilement trouvable et présente un coût élevé. Une autre solution est donc de choisir (au moins) deux moteurs, à coût contrôlé, et dont les zones de fonctionnement optimisé (zone de fonctionnement présentant les meilleurs rendements) permettent d'offrir une gamme de régime de fonctionnement acceptable, par exemple de 0 à 6000 tr/min.

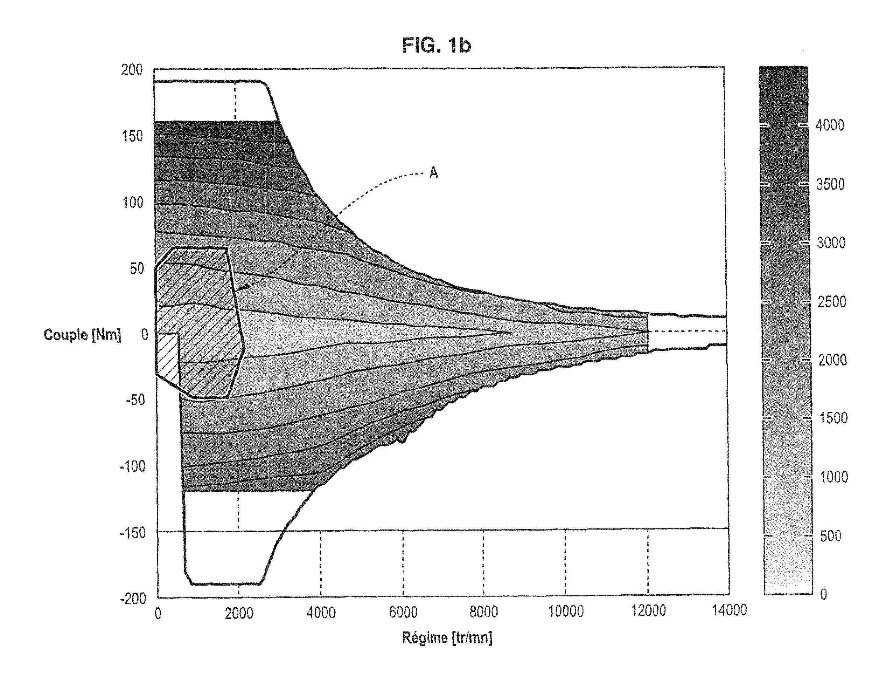

Ainsi, en référence à la figure 1b, le premier moteur électrique du dispositif est choisi afin d'avoir une zone de fonctionnement optimisé se situant à bas régime.

Cette zone de fonctionnement est représentée par la zone hachurée A. Cette zone de fonctionnement correspond, par exemple, à un mode de fonctionnement « urbain ».

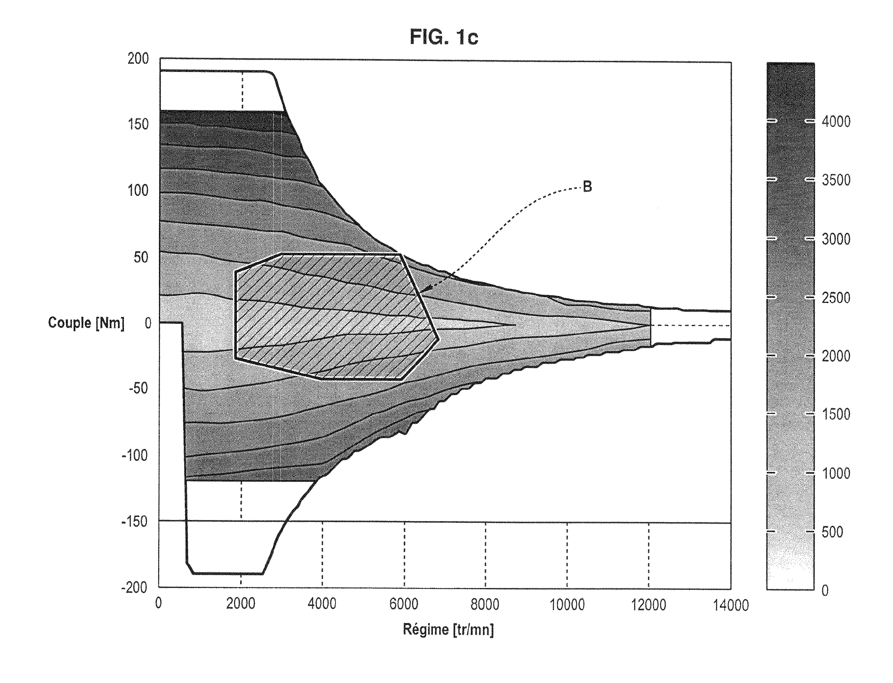

En référence à la figure 1c, le deuxième moteur du dispositif selon l'invention est choisi afin d'avoir une zone de fonctionnement optimisé se situant à haut régime ; cette zone de fonctionnement est représentée par la zone hachurée B ; cette zone de fonctionnement correspond, par exemple, à un mode de fonctionnement de type « route ».

Le choix des moteurs est important et plusieurs paramètres rentrent en compte parmi lesquels :
- Le couple maximum (Nm),
- La puissance maximale de pic (kW),
- La puissance maximale continue (kW),
- La vitesse de rotation maximale (rpm),
- Le rayon des roues du véhicule (m) et le rapport de transmission entre les roues et le moteur.

La puissance maximale de pic est délivrée pendant une durée de temps limitée (limitations thermique moteur, limitation thermique de l'électronique de puissance et/ou limitation thermique de la batterie en décharge). Cette limite de temps varie entre 10 et 20 secondes selon les spécifications et capacités des organes suscités. Cette puissance maximale de pic est normalement utilisée pour les cas de performance « pleine charge » (pédale d'accélérateur à fond par exemple). Bien évidemment, cette puissance maximale de pic demande des moyens de refroidissement de la partie électronique conséquent et donc un coût élevé. Pour cette raison, la puissance maximale de pic n'est pas la seule variable pris en compte ; notamment la puissance maximale continue (qui peut être délivrée pendant une durée plus longue) est également prise en compte pour le choix du moteur.

De manière générale, les deux moteurs sont choisis de sorte à avoir une zone de fonctionnement respective différente.

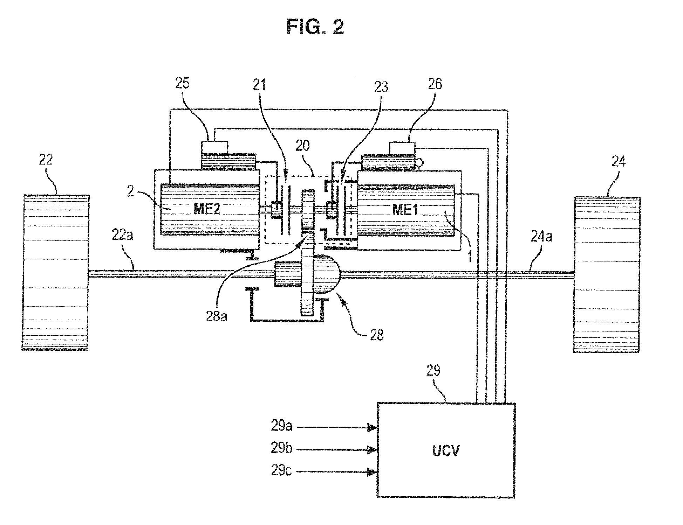

En référence à la figure 2 et selon une réalisation possible de l'invention, le dispositif d'entraînement des roues motrices comprend un premier moteur électrique 1 ayant une zone de fonctionnement optimisé se situant à bas régime et un deuxième moteur électrique 2 ayant une zone de fonctionnement optimisé se situant à haut régime.

Le dispositif comprend également un moyen de couplage 20, destiné à coupler et à découpler les roues motrices 22 et 24 du véhicule, indépendamment au premier moteur 1 et au second moteur 2. C'est-à-dire que le moyen de couplage peut, de manière indépendante, d'un coté coupler ou découpler les roues motrices au moteur 1 et, de l'autre, coupler ou découpler les roues motrices au moteur 2.

Le moyen de couplage 20 comprend deux embrayages 21 et 23 associés respectivement à chacun des moteurs électriques 1 et 2. Le moyen de couplage 20 comprend également un élément de roue dentée 27, destiné à engrener l'entrée dentée 28a d'un différentiel 28. Avantageusement, l'engrènement de cette roue et de l'entrée du différentiel présente une réduction.

Le différentiel est, quant à lui, installé sur l'essieu avant ou arrière du véhicule, selon que le système d'entraînement soit à traction ou à propulsion, l'essieu comprend, par exemple, une roue gauche 22 et une roue droite 24, respectivement agencées au bout d'une transmission gauche 22a et d'une transmission droite 24a. Les transmissions 22a et 24a sont reliées au différentiel 28 qui distribue l'énergie mécanique qu'il reçoit à son entrée 28a entre les deux transmissions 22a et 24b.

Chacun des embrayages 21 et 23 est respectivement commandé par un actionneur 25 et 26, chacun des actionneurs commandant l'embrayage et/ou le débrayage dudit embrayage 21 et 23.

Le dispositif comprend en outre une unité centrale 29 destinée à commander les actionneurs 25 et 26 des embrayages 1 et 2.

Avantageusement, l'unité centrale 29 est un calculateur, par exemple sous forme d'un microcontrôleur. Des capteurs et des analyseurs, destinés à fournir des données représentatives de l'état de fonctionnement des différents éléments du véhicule sont connectés à l'unité centrale 29. L'unité centrale 29 comprenant des sorties de contrôle et de commande destinées à commander les moteurs électriques ainsi que le moyen de couplage 20 au travers des actionneurs 21 et 23.

Avantageusement, le calculateur comprend trois entrées 29a, 29b et 29c correspondant respectivement à un signal d'accélérateur, un signal de freinage et une estimation de la vitesse du véhicule. Les signaux 29a et 29b correspondent à des commandes du conducteur. Préférentiellement, ces signaux émanent de capteurs agencés au niveau des pédales d'accélération et de freinage. Par exemple, les capteurs sont des capteurs de position, mesurant l'enfoncement de la pédale. Avantageusement, il est prévu dans la détermination des signaux 29a et 29b, de prendre en compte en outre, la vitesse d'écrasement des pédales et la pression exercée par le conducteur sur lesdites pédales.

Le signal 29c est un signal correspondant à une détermination de la vitesse longitudinale du véhicule. Cette détermination est, par exemple, basée sur la vitesse longitudinale mesurée au niveau de chacune des roues du véhicule. Une telle détermination est bien connue de l'état de l'art et n'est pas plus détaillée.

L'unité centrale 29 (ou calculateur), à partir des signaux d'entrée, détermine de façon optimale le mode de fonctionnement instantané permettant de répondre à la demande du conducteur, et de limiter la consommation électrique du véhicule.

Ainsi, pendant les phases de freinage, l'unité centrale 29 choisira le mode de fonctionnement permettant de récupérer, par exemple, le maximum d'énergie et ainsi, recharger au mieux le système de stockage d'énergie (non représenté) alimentant les moteurs électriques, par exemple une batterie du véhicule.

Avantageusement, les embrayages pourront être remplacés par un crabot et un actionneur on/off. L'avantage des crabots est qu'ils sont peu chers et qu'ils nécessitent peu de développement.

Ainsi, connaissant le régime du moteur électrique associé au crabot, on sait à quelle valeur de régime on doit amener la vitesse de rotation le moteur électrique pour synchroniser le crabot, et ainsi effectuer un crabotage sans bruit, ni à-coup.

Quatre modes de fonctionnement sont possibles :
a) le premier moteur électrique 1 contribue seul à la traction (ou à la propulsion) du véhicule ;
b) les deux moteurs électriques 1 et 2 contribuent simultanément à la traction (ou à la propulsion) du véhicule ;
c) le moteur électrique 2 contribue seul à la traction (ou à la propulsion) du véhicule,
d) dans un dernier cas, les deux moteurs peuvent être tous deux découplés des roues.

Ainsi, à partir de la charge demandée par le conducteur, par exemple via la pédale de commande d'accélération, l'unité centrale 29 détermine dans quelle zone de fonctionnement le conducteur souhaite amener le véhicule.

L'unité centrale détermine alors quel moteur aura le meilleur rendement dans cette zone de fonctionnement et, si c'est nécessaire, à l'aide du système de couplage 20, couple le bon moteur aux roues motrices, et simultanément découple l'autre moteur des roues motrices.

Avantageusement, il est prévu la superposition des deux moteurs, ce qui permet d'avoir une plus grande capacité d'accélération en situations d'urgence (manoeuvres d'insertion de file, dépassement, évitement, démarrage pleine charge,...). Egalement, lors d'une transition entre deux moteurs tel que décrit précédemment, l'invention prévoit une étape transitoire durant laquelle les deux moteurs sont simultanément connectés physiquement aux roues du véhicule afin d'éviter des à-coups éventuels lors de cette transition. Préférentiellement, cette étape transitoire est d'une ou deux secondes.

Avantageusement encore, le moteur 1 est dimensionné « au juste nécessaire » pour assurer la mobilité du véhicule dans les conditions usuelles de fonctionnement : décollage sur le plat, suivi de cycles de roulage « urbain » et « périurbain » peu chargés. Le moteur 2, quant à lui est dimensionné pour assurer un fonctionnement du véhicule dans des modes « périurbain » soutenu, « route » ou « autoroute ».

Un autre avantage d'un dispositif selon l'invention se situe dans la récupération d'énergie.

En effet, lors d'une phase de freinage, grâce au dispositif, la récupération d'énergie peut être effectuée soit par un seul moteur (soit le moteur 1, soit le moteur 2) mais également par l'ensemble des deux moteurs couplés aux roues motrices.

Dans le cas d'un seul moteur, on peut obtenir, par exemple, un freinage de 0,6g (g étant l'accélération de la pesanteur, généralement égale à 9.81 m.s⁻²) ; dans le cas des deux moteurs simultanément connectés physiquement aux roues lors de la phase de freinage, on peut obtenir un gain de 50 % dans le freinage. Le fait de disposer de deux moteurs et d'avoir la possibilité de fonctionner avec un seul moteur ou les deux permet d'avoir une plus grande liberté en termes d'assistance au freinage tout en combinant ceci avec une puissance récupérable plus élevée.

Le système de freinage peut être de deux types :
- freinage classique indépendant,
- freinage découplé.

Dans le premier cas, le véhicule électrique équipé de l'architecture bimoteur décrite permet de récupérer de l'énergie (avec un moteur seul ou les deux moteurs en mode générateur dès qu'on relâche la pédale d'accélérateur). En superposant les couples de freinage (correspondant au couple générateur résistant) des moteurs, on dispose d'une plus grande capacité de récupération, surtout à haute vitesse, où un moteur seul aurait une capacité de récupération insuffisante pour un freinage « d'urgence ».

Dans le cas d'un freinage découplé, le besoin global de couple de freinage qui est la traduction du freinage demandé par le conducteur en appuyant sur la pédale de frein (déplacement, vitesse d'écrasement et force à la pédale), et qui se traduit par une « décélération demandée », est répartie entre le freinage classique et le freinage récupératif disponible avec un moteur seul ou avec les deux. Ainsi, la capacité de récupération d'énergie (et donc l'autonomie du véhicule) est accrue du fait de pouvoir utiliser la somme des deux couples moteur en mode génératrice car une plus grande partie de la décélération demandée peut être absorbée par le freinage récupératif des deux moteurs superposés. Dans les cas de freinages légers, et selon de la vitesse initiale du véhicule, le seul freinage récupératif suffit, ce qui maximise le bilan énergétique, car toute l'énergie du freinage est récupérée et il n'y a pas de perte d'énergie par échauffement des plaquettes de frein lié au freinage classique.

II est important de noter que, dans tous les cas, la capacité de récupération d'énergie dépend, bien entendu, du l'état de charge de la batterie équipant le véhicule, ainsi que de sa capacité de puissance absorbable en charge. Avantageusement, ce paramètre est pris en compte dans la stratégie de freinage décrite ci-dessus afin de limiter la partie de freinage associée aux moteurs si ces derniers ont un état de charge élevé. Notamment, un des avantages de l'invention est de pouvoir choisir quel moteur utiliser pour la récupération d'énergie. En effet, chaque moteur ayant des zones de fonctionnement différentes, le niveau d'énergie récupérée est différent selon le moteur utilisé. Ainsi selon l'état de charge de la batterie, on choisit un moteur plutôt qu'un autre pour la récupération d'énergie.

Dans une réalisation possible, les deux moteurs électriques sont montés face à face, de manière coaxiale.

Cependant, il peut être prévu de monter les deux moteurs électriques côte à côte.

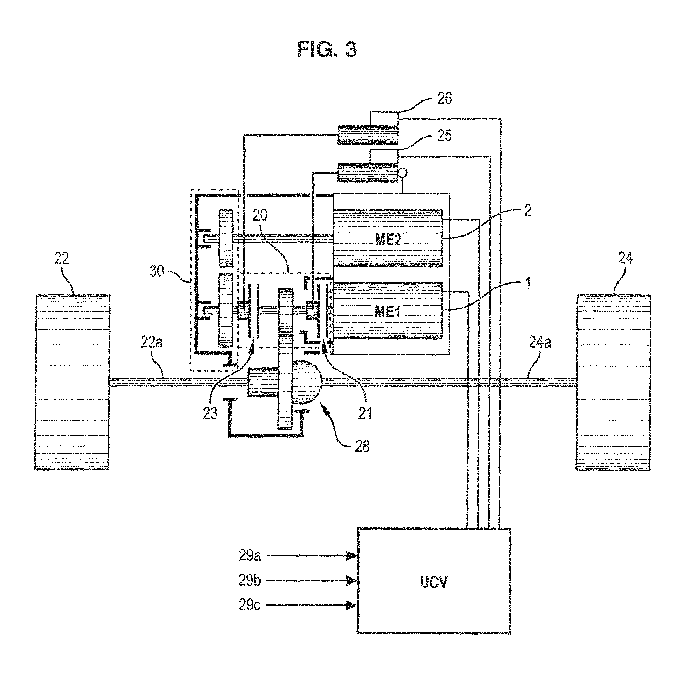

Ainsi, en référence à la figure 3 et selon une réalisation possible de l'invention, le dispositif comprend un premier moteur électrique 1 ayant une zone de fonctionnement optimisé se situant à bas régime, et un second moteur électrique 2 monté côte à côte du premier moteur et ayant une zone de fonctionnement optimisé se situant à haut régime.

Le dispositif comprend également un moyen de couplage 20 destiné à coupler et découpler les roues motrices 22 et 24 du véhicule indépendamment au premier moteur électrique 1 et au deuxième moteur électrique 2.

Le dispositif comprend en outre un système de réduction 30 situé entre le moteur électrique 2 et le moyen de couplage 20.

Un tel système de réduction permet de réduire le coût du dispositif.
En effet, le coût d'un moteur électrique dépend essentiellement de la vitesse maximale de ce moteur. Plus cette vitesse maximale est élevée, plus le moteur est cher. En proposant ainsi un système de réduction 30, le dispositif permet de choisir un moteur électrique 2 ayant une zone de fonctionnement optimisé se situant à haut régime, avec une vitesse maximale moins élevée, permettant ainsi de réduire le coût du moteur électrique 2, et par cette occasion, le coût global du dispositif.

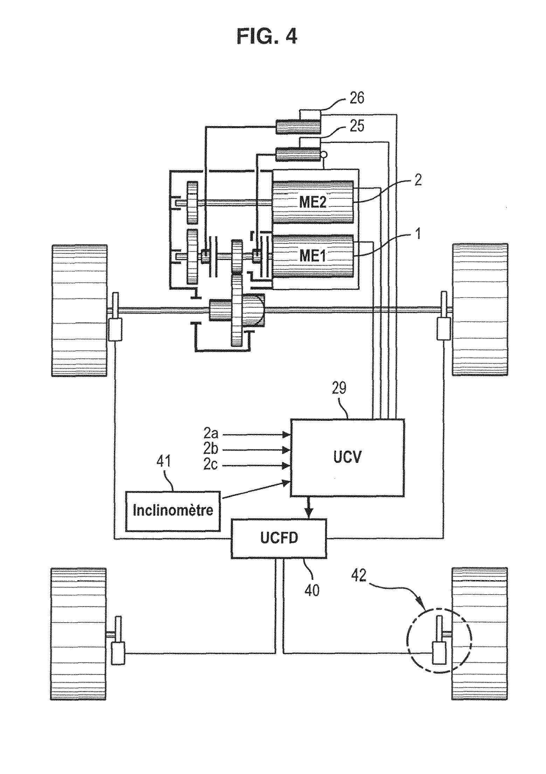

En référence à la figure 4 et selon une réalisation possible de l'invention, les deux moteurs électriques sont agencés côte à côte. Dans le cas d'utilisation d'un système de freinage découplé, le dispositif comprend une Unité de Contrôle de Freinage Découplé (UCFD) 40, reliée et commandée par l'unité de contrôle 29.

L'unité de contrôle 29 envoie en sortie des signaux de commande de couple, de régime des moteurs électriques 1 et 2, de commande des embrayages (actionneurs 25 et 26), de commande des freins 42 (par exemple des freins électro-hydrauliques) via l'UCFD 40, ...

L'unité de commande 29 comprend, comme entrée, des signaux de commande du véhicule, tels que : commande d'accélérateur, commande de frein, commande de sens de la marche (avant ou arrière), signal de « vitesse véhicule » (issu, par exemple, des unités de freinage via les capteurs de vitesse roues) et de « pente » (issu, par exemple, d'un inclinomètre 41).

Avantageusement, le signal de pente est également établi par un procédé de calcul. Par exemple, le principe de ce procédé est le suivant : comparer à une vitesse donnée la résistance à l'avancement réelle à la résistance à l'avancement que l'on aurait à la même vitesse si on roulait à cette vitesse constante, sur le plat et avec vent nul. La résistance à l'avancement réelle est alors calculée à partir du couple total aux roues, par l'intermédiaire des couples moteurs (connus par la tension d'alimentation et les courants associés).

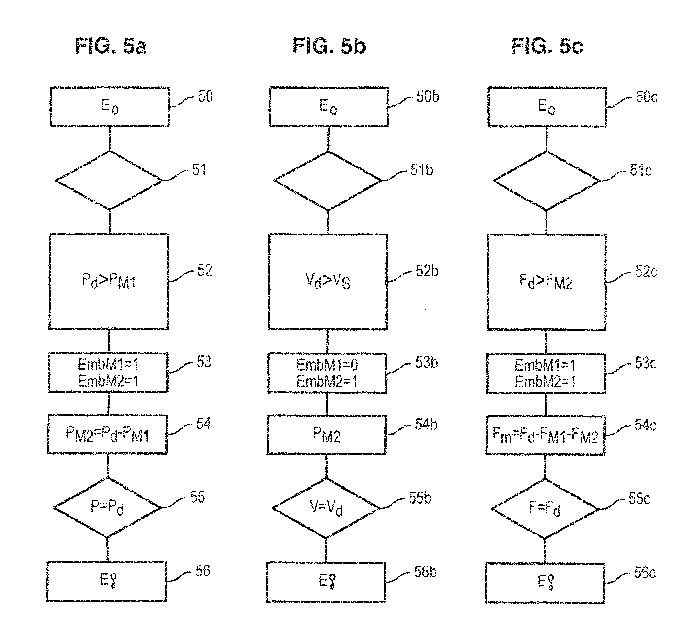

En référence aux figures 5a, 5b et 5c, le procédé de commande d'un dispositif selon l'invention comprend les étapes suivantes :
- départ d'un état initial Eo 50, 50b et 50c, avec une configuration initiale du dispositif,
- détecter des changements de commandes 51, 51b et 51c (commandes conducteur, pente, ...),
- déterminer si la configuration initiale est apte à répondre aux changements de commandes (étapes 52, 52b et 52c),
- selon le résultat de l'étape précédente, changer la configuration du dispositif (étapes 53, 53b et 52c),
- déterminer la commande du ou des moteurs (étapes 54, 54b et 54c),
- déterminer si la nouvelle configuration répond aux changements de commande (étapes 55, 55b et 55c),
- arrivée à un état final 56, 56b et 56c.

Plus particulièrement, en référence à la figure 5a, une réalisation possible d'un procédé de commande selon l'invention comprend les étapes suivantes :
- départ d'un état initial Eo 50 avec une configuration initiale du dispositif (les roues motrices du véhicule sont couplées au premier moteur mais pas au second moteur).
- détection d'un changement de commandes 51 : la pente estimée est supérieure à une pente seuil et/ou l'accélération demandée par le conducteur est augmentée,
- la configuration initiale du dispositif ne permet pas de fournir une puissance nécessaire à l'accélération demandée. Plus précisément, la puissance demandée P_{d} est supérieure à la puissance maximale de pic du moteur 1 P_{M1}(étape 52),
- changement de la configuration du dispositif : les roues motrices du véhicule sont couplées au premier moteur et au second moteur (étape 53),
- la puissance de commande du second moteur P_{M2} est égale à la puissance demandée P_{d} moins la puissance maximale de pic du premier moteur P_{M1},
- la puissance conjuguée des deux moteurs P permet de répondre à la puissance demandée P_{d} (étape 55),
- arrivée à un état final Ef (étape 56),

En référence à la figure 5b, une réalisation possible d'un procédé de commande selon l'invention comprend les étapes suivantes :
- départ d'un état initial Eo 50b avec une configuration initiale du dispositif (les roues motrices du véhicule sont couplées premier moteur mais pas au second moteur).
- détection d'un changement de commandes 51b : la vitesse demandée par le conducteur est augmentée,
- la configuration initiale du dispositif n'est pas adéquate. Plus précisément, la vitesse demandée V_{d} est hors de la zone de fonctionnement optimisé du premier moteur (étape 52b). La zone est délimitée par exemple à l'aide d'une valeur seuil Vₛ,
- changement de la configuration du dispositif : les roues motrices du véhicule sont couplées au second moteur mais pas au premier moteur (étape 53b),
- on règle la puissance du second P_{M2},
- on atteint la vitesse demandée V_{d} (étape 55b),
- arrivée à un état final Ef (étape 56b),

En référence à la figure 5c, une réalisation possible d'un procédé de commande selon l'invention comprend les étapes suivantes :
- départ d'un état initial Eo 50c avec une configuration initiale du dispositif (les roues motrices du véhicule sont couplées second moteur mais pas au premier moteur),
- détection d'un changement de commandes 51c : une forte décélération (freinage) est demandée par le conducteur,
- la configuration initiale du dispositif ne permet pas de fournir la décélération demandée. Plus précisément, la décélération demandée F_{d} est supérieure au freinage maximal du second moteur F_{M2} (étape 52c),
- changement de la configuration du dispositif : les roues motrices du véhicule sont couplées aux deux moteurs mais (étape 53c),
- on règle la puissance de freinage des moteurs. Si la puissance demandée est supérieur à la somme des puissances de freinage maximales des moteurs (F_{M1}, et F_{M2}), le surplus de puissance est transféré au freinage mécanique Fₘ (étape 54c),
- on atteint la décélération demandée (étape 55c),
- arrivée à un état final Ef (étape 56c),

Le principe de l'invention peut s'adapter au moteur électrique roues. Dans ce cas, on a deux moteurs roues identiques sur l'essieu avant et deux moteurs roues identiques sur l'essieu arrière.

Avantageusement, les moteurs montés sur l'essieu avant ont des caractéristiques différentes de ceux montés sur l'essieu arrière.

## Revendications

1. Dispositif de propulsion ou de traction électrique d'un véhicule, le dispositif comprenant un premier moteur électrique (1) ayant une zone de fonctionnement optimisé (A) se situant à bas régime, un second moteur électrique (2) ayant une zone de fonctionnement optimisé (B) se situant à haut régime, **caractérisé en ce que** le dispositif comprend en outre un moyen de couplage (20) destiné à coupler et à découpler des roues motrices (22, 24) du véhicule, indépendamment au/du premier moteur électrique (1) et au/du second moteur électrique (2).

2. Dispositif selon la revendication précédente, **caractérisé en ce que** le moyen de couplage (20) comprend deux éléments d'embrayage (21, 23) associés respectivement au premier moteur électrique (1) et au second moteur électrique (2).

3. Dispositif selon la revendication précédente, **caractérisé en ce que** chaque élément d'embrayage (21, 23) est commandé par un actionneur (25, 26).

4. Dispositif selon la revendication 2 ou 3, **caractérisé en ce que** les éléments d'embrayage (21, 23) sont des crabots.

5. Dispositif selon l'une des revendications 1 à 4, **caractérisé en ce que** le moyen de couplage (20) comprend un moyen d'entraînement couplé à l'entrée d'un différentiel (28) associé aux roues motrices (22,24).

6. Dispositif selon l'une des revendications 1 à 5, **caractérisé en ce qu'**il comprend une unité centrale (29) destinée à commander le moyen de couplage (20).

7. Dispositif selon l'une des revendications 1 à 6, **caractérisé en ce que** l'unité centrale est destinée à commander les deux moteurs électriques (1, 2).

8. Dispositif selon la revendication 1 à 7, **caractérisé en ce qu'**il comprend un moyen de réduction (30) agencé entre un des deux moteurs électriques et le moyen de couplage (20).

9. Dispositif selon l'une des revendications précédentes **caractérisé en ce que** le moyen de couplage (20) comprend une roue dont l'axe de rotation est relié à un premier embrayage correspondant au premier moteur et à un deuxième embrayage correspondant au second moteur, la roue du couplage (20) entraînant l'entrée d'un différentiel correspondant aux roues motrices (22,24) du véhicule.

10. Dispositif selon l'une des revendications 1 à 9, **caractérisé en ce que** le moyen de couplage permet les quatre configurations suivantes :
a. les deux moteurs sont couplés aux roues,
b. seul le premier moteur est couplé aux roues,
c. seul le deuxième moteur est couplé aux roues,
d. les deux moteurs sont découpés des roues.

11. Véhicule comprenant des roues motrices **caractérisé en ce qu'**il comprend un dispositif de propulsion ou de traction selon l'une des revendications précédentes.

12. Procédé de commande d'un dispositif selon l'une des revendications 1 à 10, **caractérisé en ce qu'**il comprend les étapes suivantes :
- départ d'un état initial (50, 50b, 50c), avec une configuration initiale du dispositif,
- détecter des changements de commandes (51, 51b, 51c),
- déterminer si la configuration initiale est apte à répondre aux changements de commande (52, 52b, 52c),
- selon le résultat de l'étape précédente, changer la configuration du dispositif (53, 53b, 52c),
- déterminer la commande du ou des moteurs avec la nouvelle configuration du dispositif (54, 54b, 54c),
